Europäisches Patentamt

European Patent Office

Office européen des brevets

(19)

(11) Veröffentlichungsnummer: **0 211 349**

**A2**

(12) # EUROPÄISCHE PATENTANMELDUNG

(21) Anmeldenummer: **86110266.3**

(22) Anmeldetag: **25.07.86**

(51) Int. Cl.⁴: **C 02 F 1/46**

(30) Priorität: **02.08.85 DE 3527733**

(43) Veröffentlichungstag der Anmeldung:
**25.02.87 Patentblatt 87/9**

(84) Benannte Vertragsstaaten:
**BE CH DE FR LI NL**

(71) Anmelder: **Tiesler, Ekkehard, Prof. Dr. med.**
**Eschenweg 22**
**D-6650 Hamburg(DE)**

(72) Erfinder: **Tiesler, Ekkehard, Prof. Dr. med.**
**Eschenweg 22**
**D-6650 Hamburg(DE)**

(74) Vertreter: **Bernhardt, Winfrid, Dr.-Ing.**
**Kobenhüttenweg 43**
**D-6600 Saarbrücken(DE)**

(54) Verfahren und Vorrichtung zum Desinfizieren, insbesondere von Wasser, sowie Anwendung des Verfahrens und der Vorrichtung.

(57) Als ein Verfahren zum Desinfizieren, insbesondere von Wasser, wird ein oligodynamisch wirksames Metall elementar eingesetzt und unter Anlegen elektrischer Spannung ional in Lösung gebracht.

Hier wird die Oligodynamie besonders zweckmäßig zum Desinfizieren genutzt, nämlich durch Erzeugung der Metallionen in einer Weise, die nur zu der benötigten geringen Konzentration führt und dabei keinen Ballast hinzufügt, wie es beim Einbringen eines dissozierenden Salzes des Metalles mit den Anionen dieses Salzes der Fall wäre.

Das Verfahren läßt sich insbesondere anwenden für das Befeuchtungswasser von Klimaanlagen, Beatmungsgeräten oder Sauerstoffgeräten oder das Einsatzwasser von Vernebelungsgeräten oder Spüleinrichtungen der Urologie oder für das Wasser von Schwimmbecken.

EP 0 211 349 A2

Fig. 4

- 1 -

Prof. Dr. med. E. Tiesler, D-6650 Homburg/Saar

"Verfahren und Vorrichtung zum Desinfizieren, insbesondere von Wasser,
 sowie Anwendung des Verfahrens und der Vorrichtung"

---

Die Erfindung betrifft ein Verfahren zum Desinfizieren, insbesondere von
Wasser.
Ferner betrifft die Erfindung eine Vorrichtung zum Durchführen des Verfahrens.
Schließlich betrifft die Erfindung Anwendungen des Verfahrens und der Vorrichtung.

Als Aufgabe liegt der Erfindung zugrunde, in zweckmäßiger und kostengünstiger
Weise mit nur geringem Einsatz von Desinfektionsmittel zu desinfizieren.

Gemäß der Erfindung wird dieser Zweck dadurch erfüllt, daß ein oligodynamisch
wirksames Metall elementar eingesetzt und unter Anlegen elektrischer Spannung
ional in Lösung gebracht wird.

Unter der Bezeichnung "Oligodynamie" ist die entwicklungshemmende und abtötende Wirkung einiger Metallionen in geringster Konzentration auf Mikroorganismen bekannt. Die Erfindung nutzt diese Wirkung, und zwar besonders
zweckmäßig, nämlich durch Erzeugung der Metallionen in einer Weise, die nur zu der benötigten geringen Konzentration führt und dabei keinen Ballast
hinzufügt, wie es beim Einbringen eines dissozierenden Salzes des Metalles
mit den Anionen dieses Salzes der Fall wäre.

Die hier insbesondere in Betracht kommenden Metalle sind Silber, Kupfer,
Wismut, Cadmium, Molybdän und Tellur.

Nach einer zweckmäßigen Ausgestaltung der Erfindung wird Gleichspannung
angelegt und das Metall als Anode eingesetzt und beispielsweise eine
Spannung von 0,5 bis 5 Volt angelegt und ein Strom von 0,5 bis 20 Milliampère erzeugt. Dazu wird vorzugsweise eine Kathode, z.B. aus Kohle,
eingesetzt, die gespült wird, um die Anlagerung von Kupferionen und
schließlich das Ausfällen metallischen Kupfers daran zu vermindern.

Überraschenderweise wurde jedoch gefunden, daß sich auch mit dem Anlegen
von Wechselspannung sehr günstige, teils noch günstigere, Ergebnisse erzielen lassen, obwohl dabei während derjenigen Phasen, in denen das Metall
als Kathode geschaltet ist, die Ionisierung gehindert wird. Die Verhältnisse sind jedoch komplex. Es kommen verschiedenste Einflüsse zum
tragen.
Als Vorteil der Wechselspannung wurde ein unter bestimmten Umständen geringerer Materialverbrauch beobachtet. Das ist im Falle von Silber,
welches sich als ein besonders geeignetes Metall erwiesen hat, von einer
gewissen Bedeutung.
Bei Wechselstrom sind höhere Spannungen angebracht. Beispielsweise werden
2 bis 20 Volt angelegt und wird ein Strom von 0,2 bis 10 Milliampère
erzeugt.

Weiter hat es sich als sehr vorteilhaft erwiesen, wenn ein Salz oder
Hydroxid des Metalles zugegen ist, etwa als Verunreinigung der Metalloberfläche. Die Abgabe von Metallionen in die Lösung ist dann sehr viel größer.

Um die elektrolytische Zersetzung des Wassers zu vermeiden, kann man einen
Puffer zugeben, etwa einen Phosphatpuffer, wenn es der Anwendungsfall erlaubt.

Eine Vorrichtung zum Durchführen eines erfindungsgemäßen Verfahrens weist
demgemäß ein Gefäß für ein zu desinfizierendes wässriges Medium, insbesondere Wasser, auf, das eine Elektrode aus einem oligodynamisch wirksamen Metall derart enthält, daß das Metall in oligodynamisch wirksamer Konzentration ional in Lösung geht.

Eine Anwendung des Verfahrens und der Vorrichtung kommt insbesondere für das Befeuchtungswasser von Klimaanlagen, Beatmungsgeräten oder Sauerstoffgeräten oder das Einsatzwasser von Nebelungsgeräten oder Spüleinrichtungen der Urologie oder auch für das Wasser von Schwimmbecken in Betracht.

Im folgenden sei die Erfindung anhand von Versuchsergebnissen sowie anhand eines Ausführungsbeispiels weiter erläutert.

Die Wirksamkeit des erfindungsgemäßen Verfahrens wurde in zahlreichen Versuchen geprüft.

Die Versuche wurden durchgeführt an Bakterienkulturen von Pseudomonas aeruginosa, E. coli haem., Bacillus subtilis und Staphylokoggus aureus.

Als oligodynamisch wirksame Metalle wurden Silber und Kupfer gewählt.

Sie wurden bei Gleichstrom als Anode zusammen mit einer Kohle-Kathode eingesetzt, ferner umgekehrt, ferner bei Wechselstrom.

Es wurde mit Stromleistungen von 5 m Watt, 10 m Watt und 20 m Watt gearbeitet.

Um Wasserzersetzung zu verhindern, wurde ein Phosphat-Puffer zugegeben.

Die Keimtötung wurde ermittelt nach 1 Std., 2 Std., 4 Std. und 8 Std..

Etwas überraschend wurden im Durchschnitt bei Wechselstrom etwa gleich gute Wirkungen erzielt wie bei Gleichstrom mit dem oligodynamisch wirksamen Metall als Anode. Die Wirkung mit dem oligodynamisch wirksamen Metall als Kathode war erwartungsgemäß gering.
Je nach den Versuchsparametern gelang eine weitgehende bzw. eine vollständige Abtötung der Bakterien innerhalb 8 Std., oft schon innerhalb 2 oder sogar 1 Std..

Die Versuche an Pseudomonas aeruginosa wurden, allerdings nur mit Silber als oligodynamisch wirksamem Metall, auch in reinem Wasser durchgeführt, d.h.

ohne den Phosphat-Puffer, aber sonst in gleicher Weise mit der einen
Ausnahme, daß bei Wechselstrom eine Edelstahlelektrode statt der Graphitelektrode eingesetzt wurde, weil letztere eine Schwärzung der Silberelektrode hervorrief.

Die Silberelektrode bestand aus Vollmaterial von 0,5 cm Durchmesser. Die
Edelstahlelektrode war rohrförmig mit einem Innendurchmesser von 0,5 cm
und einem Außendurchmesser von 0,7 cm. Beide Elektroden hatten eine
Eintauchtiefe von etwa 6 cm und einen Abstand von 5,5 cm voneinander.

Das Leitungswasser hatte bei einer Wassertemperatur von 10,4° C und einer
Lufttemperatur von 20,2° C folgende Analyse:  pH  7,48, Leitfähigkeit 195 µs
(Mikro-Siemens), $NH_3$ < 0,01 mg/l, $NO_2$ < 0,01 mg/l, $NO_3$ 16,00 mg/l,
Cl  23,00 mg/l, $SO_4$ 20,00 mg/l, $KMnO_4$ 3,00 mg/l, freies $CO_2$ 2,80 mg/l,
aggressives $CO_2$ 2,40 mg/l, $O_2$ 11,40 mg/l, Fe <0,01 mg/l, Mn < 0,01 mg/l,
$P_2O_5$ 0,03 mg/l, $SiO_2$ (Kieselsäure) 9,20 mg/l, Ca 23,60 mg/l, Mg  7,80 mg/l,
Na  7,40 mg/l, K 4,70 mg/l, KH (Karbonathärte)  2,10° DH (Grad deutsche Härte),
GH (Gesamthärte)  5,10° DH (Härtebereich 1).

Das Wasser wurde in einer Menge von 500 ml verwendet. Versuchsgefäß war eine
Glasflasche mit verschiedenen Einfüllstutzen, die in einem Wasserbad auf einer Temperatur von 25° C gehalten wurde.
Die Bebrütungszeit der Keime vor Versuchsbeginn betrug 22 Stunden.

Versuch I: Nullversuch ohne Einwirkung Versuch II: Gleichstrom, Silber als Anode Versuch III: Gleichstrom, Silber als Kathode Versuch IV: Wechselstrom Versuch V: Gegenversuch: Statt Elektroden ein Silberstab ohne Spannung

Die Versuchsergebnisse sind in der Zeichnung graphisch dargestellt. Die
Versuche I bis V sind an den betreffenden Kurven vermerkt.

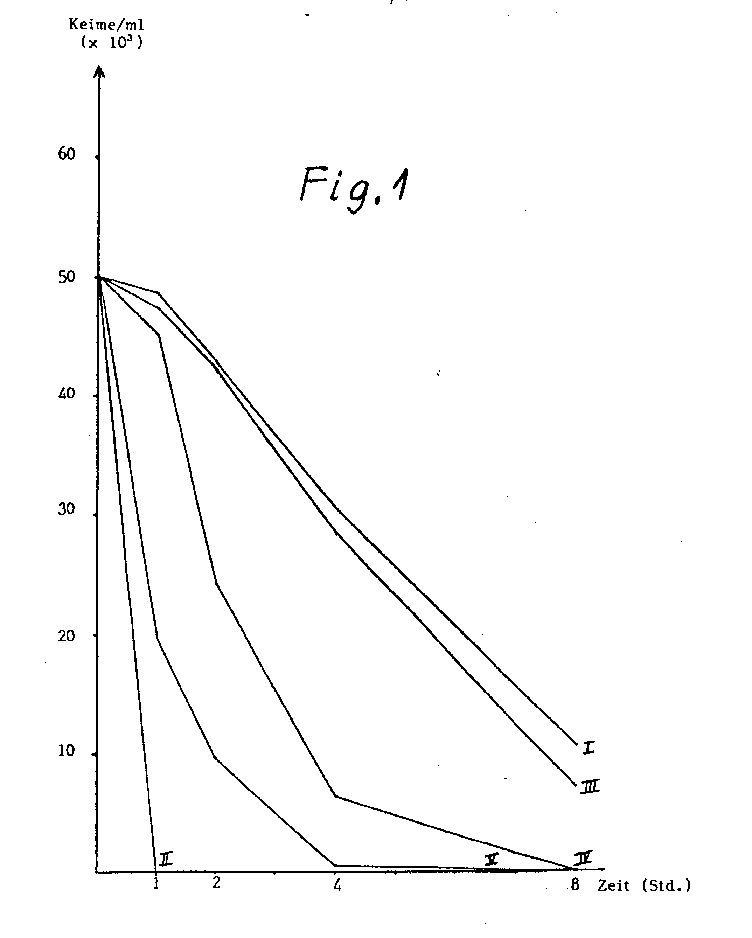

Fig. 1 zeigt den Rückgang der Keimzahl bei Einspeisung einer Stromleistung
       von 5 m Watt,

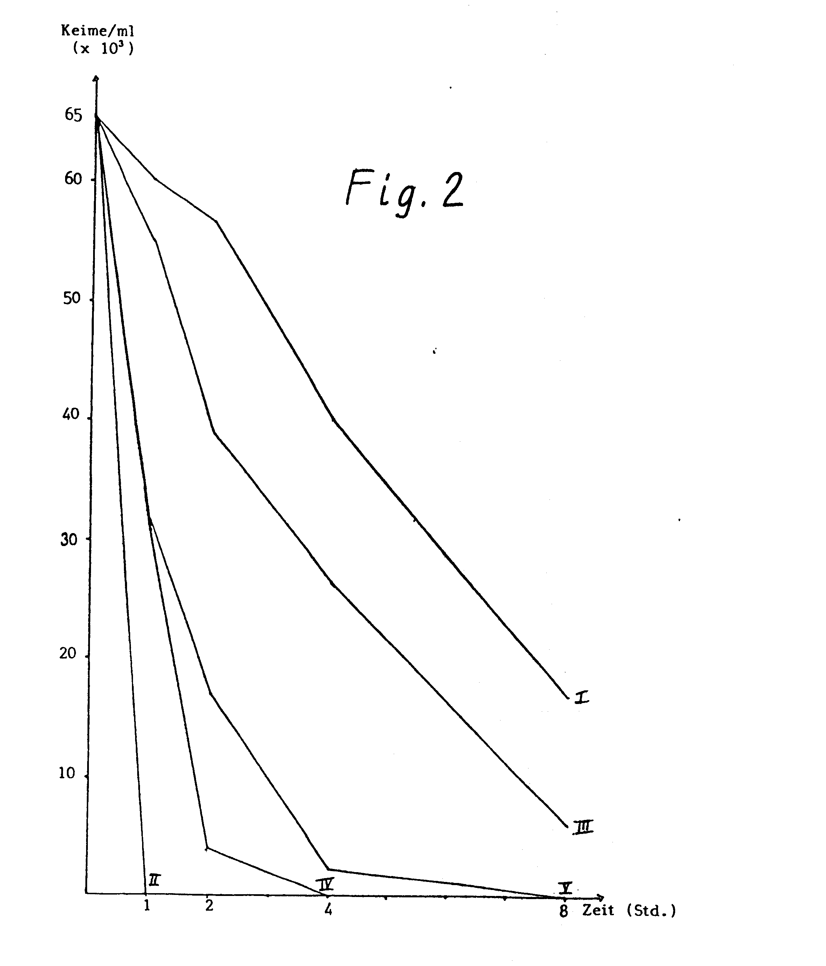

Fig. 2 bei 10 m Watt und

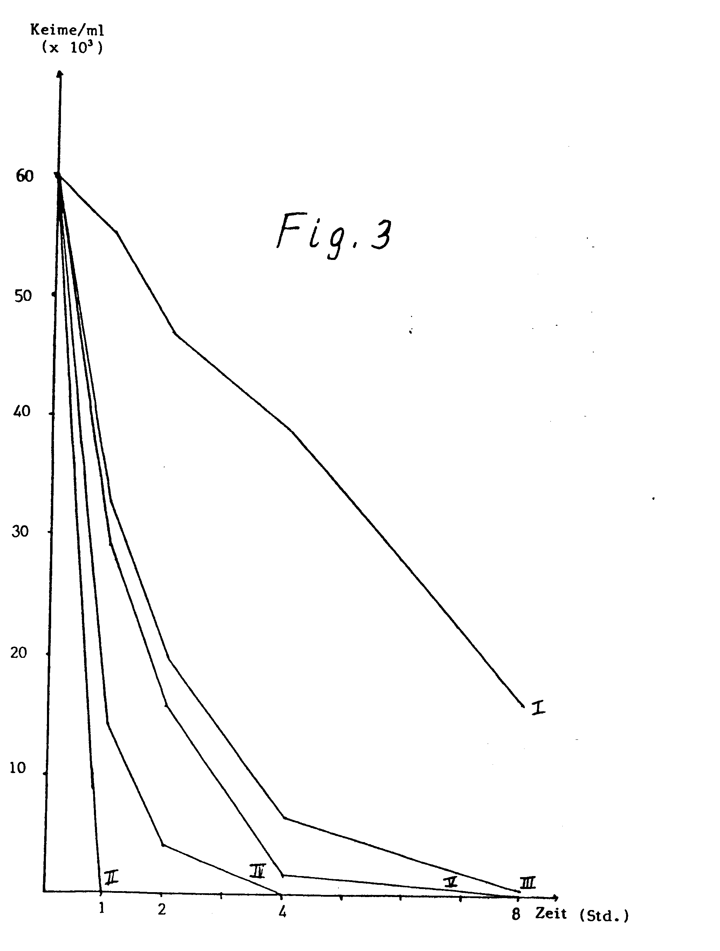

Fig. 3 bei 20 m Watt.

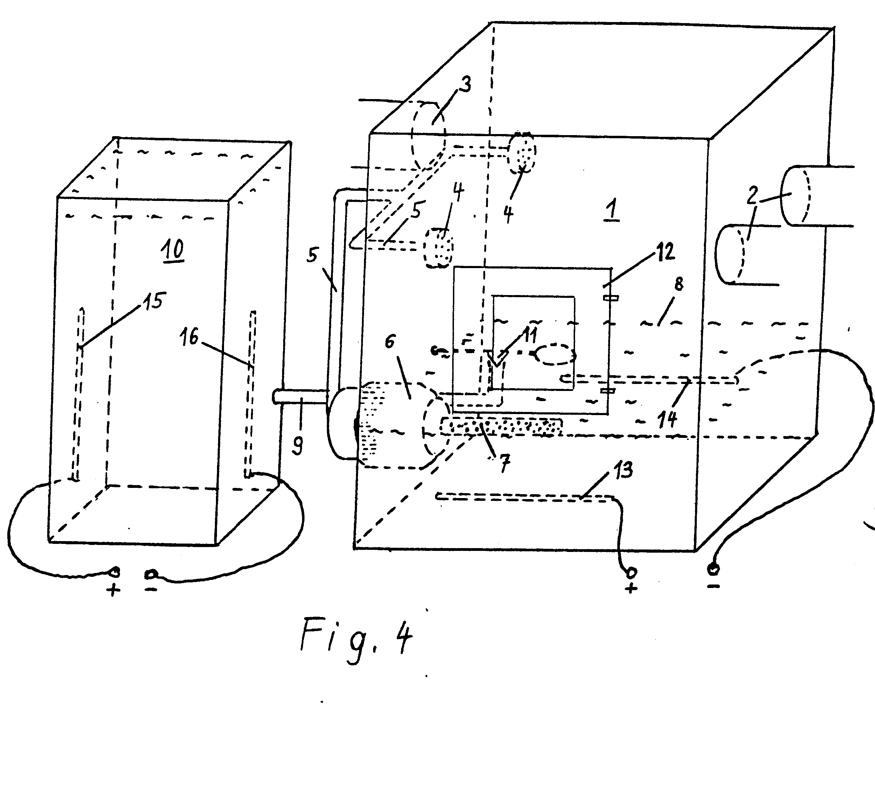

Fig. 4 zeigt als praktisches Ausführungsbeispiel eine Befeuchtungseinrichtung
       ("Wäschekammer") der Klimaanlage z.B. eines Operationssaals, schematisiert in perspektivischer Darstellung.

Ein Gehäuse 1 weist zwei Luftzuführungen 2, eine Luftableitung 3 und zwei Sprühdüsen 4 auf, die durch Leitungen 5 mit einer Pumpe 6 verbunden sind, von der ein gelochtes Ansaugrohr 7 in eine in dem Gehäuse 1 bis zu einem Niveau 8 reichende Wasserfüllung ragt. Eine Verbindung 9 mit einem Vorratsgefäß 10 mündet in die Wasserfüllung des Gehäuses 1 mit einem Niveauregulierventil 11. Das Gehäuse 1 ist durch eine Klappe 12 zugänglich.

In dem Gehäuse 1 sind in der Wasserfüllung zwei Elektroden 13 und 14 angeordnet, von denen die Anode 13 aus Silber und die Kathode 14 aus Kohle besteht.
Gleiches gilt für zwei Elektroden 15 und 16 in dem Vorratsgefäß 10.

Die durch die Pumpe 6 aus der Wasserfüllung gespeisten Sprühdüsen 4 zerstäuben in dem Gehäuse 1 Wasser, das die durch die Luftzuführungen 2 und die Luftableitung 3 durch das Gehäuse 1 hindurchgeführte Luft befeuchtet und im übrigen in die Wasserfüllung zurückfällt. Das durch die Luft abgeführte Wasser wird durch das Niveauregulierventil 11 von Zeit zu Zeit aus dem Vorratsgefäß 10 ersetzt.

Sowohl in dem Gehäuse 1 als auch in dem Vorratsgefäß 10 wird durch die Elektroden 13 bis 16 in der oben erläuterten Weise das Wasser entkeimt.

Auf diese Weise wird verhindert, daß die von der Klimaanlage in die Räume eingeführte Luft durch ihre Befeuchtung mit Keimen beladen wird.

- 1 -

Patentansprüche:

1. Verfahren zum Desinfizieren, insbesondere von Wasser,
   dadurch gekennzeichnet,
   daß ein oligodynamisch wirksames Metall elementar eingesetzt und unter
   Anlegen elektrischer Spannung ional in Lösung gebracht wird.

2. Verfahren nach Anspruch 1,
   dadurch gekennzeichnet,
   daß Gleichspannung angelegt und das Metall als Anode eingesetzt wird.

3. Verfahren nach Anspruch 2,
   dadurch gekennzeichnet,
   daß eine Kathode, vorzugsweise aus Kohle, eingesetzt wird, die gespült
   wird.

4. Verfahren nach Anspruch 2 oder 3,
   dadurch gekennzeichnet,
   daß eine Spannung von 0,5 bis 5 Volt angelegt und ein Strom von 0,5 bis
   20 Milliampère erzeugt wird.

5. Verfahren nach Anspruch 1,
   dadurch gekennzeichnet,
   daß Wechselspannung angelegt wird.

6. Verfahren nach Anspruch 4, dadurch gekennzeichnet, daß eine Spannung von 2 bis 20 Volt angelegt und ein Strom von 0,2
bis 10 Milliampère erzeugt wird.


7. Verfahren nach einem der Ansprüche 1 bis 6, dadurch gekennzeichnet, daß das Metall Silber, Kupfer, Wismut, Cadmium, Molybdän und/oder Tellur
ist.


8. Verfahren nach einem der Ansprüche 1 bis 7, dadurch gekennzeichnet,

daß ein Salz des Metalles zugegeben wird.


9. Verfahren nach einem der Ansprüche 1 bis 8, dadurch gekennzeichnet, daß ein Puffer zugegeben wird.


10. Vorrichtung zum Durchführen eines Verfahrens nach einem der Ansprüche
1 bis 9, dadurch gekennzeichnet, daß ein Gefäß (1; 10) für ein zu desinfizierendes wässriges Medium, insbesondere Wasser, eine Elektrode (13; 15) aus einem oligodynamisch wirksamen Metall derart enthält, daß das Metall in oligodynamisch wirksamer
Konzentration ional in Lösung geht.


11. Anwendung eines Verfahrens nach einem der Ansprüche 1 bis 9 oder einer
Vorrichtung nach Anspruch 10 für das Befeuchtungswasser von Klimaanlagen,
Beatmungsgeräten oder Sauerstoffgeräten oder das Einsatzwasser von Vernebelungsgeräten oder Spüleinrichtungen der Urologie oder für das Wasser
von Schwimmbecken.

Fig.1

Fig. 2

Fig.3

Fig. 4